# EUROPEAN PATENT APPLICATION

(11) **EP 2 133 779 A1**
(43) Date of publication of application: **16.12.2009**
(21) Application number: 08305249.8
(22) Date of filing: 11.06.2008
(51) Int. Cl.: G06F 3/043

(54) **Tactile device and use thereof**

(71) Applicant: Sensitive Object, 92100 Boulogne-Billancourt (FR)
(72) Inventor: Chaine, Sébastien, 94240, L'HAY LES ROSES (FR); Prigent, Vincent, 75018, PARIS (FR)
(74) Representative: Cabinet Plasseraud

(57) **Abstract**

Tactile device (1) comprising a tactile panel (10) having an acoustic sensor (15) adapted to provide signals to a processing unit such that the processing unit is able to determine a touch position (P) on the tactile panel (10), a support structure (20) adapted to support the tactile panel. The tactile panel (10) is connected to the support structure (20) through decoupling connections adapted to acoustically decouple the tactile panel from the support structure.

## Description

### FIELD OF THE INVENTION

The present invention concerns tactile devices and uses thereof.

### BACKGROUND OF THE INVENTION

The present invention concerns more precisely a tactile device comprising at least:
- a tactile panel having at least one acoustic sensor adapted to provide signals to a processing unit such that said processing unit is able to determine a touch position on the tactile panel,
- a support structure adapted to support said panel.

Generally, in such tactile devices, signals received by the processing unit are sensitive to the acoustic environment and thus may be noisy.

### OBJECTS AND SUMMARY OF THE INVENTION

An object of the present invention is to solve this problem by providing an efficient tactile device, the acoustic sensor of which provides signals with a low level of noise, even in an unfavourable environment.

To this effect, a tactile device of the type in question is **characterized in that** the tactile panel is connected to the support structure through decoupling connections which are adapted to acoustically decouple said tactile panel from said support structure.

Thanks to these decoupling connections, the vibrations which may be transmitted to the support structure by the environment are not transmitted to the tactile panel and the acoustic sensor senses only the vibrations from the touches on the surface. Consequently, the signals transmitted to the processing unit from the tactile device are not disturbed by external influences and are therefore less noisy.

In various embodiments of the tactile device proposed by the invention, one and/or the other of the following features may optionally be incorporated:
- the acoustic sensor has a frequency bandwidth and said decoupling connections are adapted to decouple said tactile panel from said support structure in substantially all of said bandwidth;
- said at least one acoustic sensor is rigidly fixed on said tactile panel;
- the decoupling connections are elastic devices;
- the decoupling connections are made of elastomer material;
- said at least one acoustic sensor is pressed on the tactile panel by compression means;
- the tactile panel includes a lower edge and an upper edge, and the support structure includes:
   -- a lower crossbeam which is connected to the lower edge of the tactile panel, and
   -- an upper crossbeam which is connected to the upper edge of the tactile panel;
- the lower crossbeam has a longitudinal groove in which the lower edge of the tactile panel is received and the upper crossbeam has a longitudinal groove in which the upper edge of the tactile panel is received;
- each groove is deeper than a vertical size of said sensor;
- the compression means comprise:
   -- a casing adapted to be inserted inside the corresponding crossbeam,
   -- a compression spring for pressing said sensor on the tactile panel with a compression force and having a length,
   -- a tuning device in contact with said compression spring, movable inside said casing to change said length for adjusting said compression force;
- the tuning device is a screw adapted to push on said compression spring inside said casing;
- at least one of said crossbeams is a hollow profile in which passes at least one cable connecting said at least one acoustic sensor to said processing unit;
- each crossbeam is telescopic;
- the tactile device further comprises a hinge having a first element rigidly fixed to said tactile panel and a second element belonging to said support structure, wherein:
   -- said second element is adapted to rotate relative to said first element,
   -- said decoupling connections are interposed between said first and second elements;
- the decoupling connections are a tube made of elastic material, having a cylindrical inner face and a cylindrical outer face, and wherein:
   -- the inner face is adapted to receive a pin of the first element,
   -- the outer face is adapted to enter inside a hollow of the second element;
- the acoustic sensor is inside said first element;
- the tactile panel is transparent;
- the tactile panel includes a front face and a rear face, said front face is adapted to be touched by a user and to transmit acoustic waves to said acoustic sensor, and said rear face is facing an image producing device, such as a LCD monitor, a projector or a television set.

Another object of the invention is a use of such tactile device, wherein the tactile device is installed in a room having a plurality of building structures, and the support structure is connected to at least two different building structures of said plurality.

In various embodiments of the use of the tactile device, one may further use one and / or other of the following dispositions:
- the plurality of building structures includes a floor, a wall, a ceiling, and a pillar.

### BRIEF DESCRIPTION OF THE DRAWINGS

Other features and advantages of the invention will be apparent from the following detailed description of embodiments given by way of non-limitating example, with reference to the accompanying drawings. In the drawings:
- Figure 1 is a perspective view of a first embodiment of the invention, showing a first variant of use,
- Figure 2 is a cross section of the first embodiment of the invention of figure 1,
- Figure 3 is a cross section of a variant of the first embodiment of the invention of figure 1,
- Figure 4 and 5 are variants of use of the first embodiment of the invention,
- Figure 6 is an exploded perspective view of a second embodiment of the invention,
- Figure 7 is a cross section view of the second embodiment of the figure 6,
- Figure 8 to 12 are variants of use of the second embodiment of the invention.

### MORE DETAILED DESCRIPTION

In the different figures, the same references denote identical or similar elements.

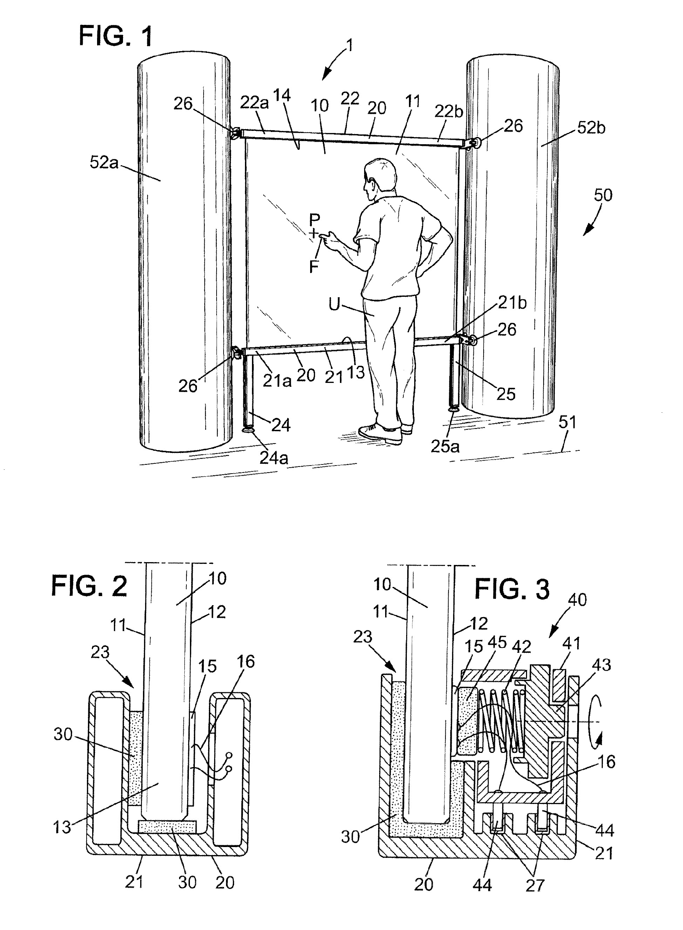

Figures 1 to 5 represent a first embodiment of the invention and configurations for using this first embodiment.

The tactile device 1 comprises at least:
- a tactile panel 10 having at least one acoustic sensor 15 (see figure 2) adapted to provide signals to a processing unit (not shown),
- a support structure 20 adapted to support said tactile panel 10.

This tactile device 1 is installed in a room 50 of a building, having a plurality of building structures. The support structure 20 of the tactile device 10 is connected to more than two building structures, so that said support structure 20 is rigid, easily and quickly installed into said room 50.

The processing unit is able to determine a touch position P on the tactile panel, the touch being produced for example by a finger F of a user U on said tactile panel 10.

The tactile panel 10 is a rectangular vertical plate having a front face 11 in front of the user U, and a rear face 12 opposite to said front face. The tactile panel 10 includes also a lower edge 13 and an upper edge 14.

Figure 1 represents a first variant of a use of the first embodiment of the tactile device 1. In this first variant, the building structures are a floor 51 and two pillars 52a, 52b. The support structure 20 includes:
- a lower longitudinal crossbeam 21 having a first end 21a and second end 21b, opposite to said first end,
- an upper longitudinal crossbeam 22 having a third end 22a and fourth end 22b, opposite to said third end,
- a first leg 24 connected to the first end 21a and extending downward from this lower crossbeam 21 down to an fifth end 24a,
- a second leg 25 connected to the second end 21b and extending downward from this lower crossbeam 21 down to an sixth end 25a.

The tactile panel 10 extends between the lower crossbeam 21 and the upper crossbeam 22, the lower crossbeam 21 being connected to the lower edge 13 of the tactile panel 10, and the upper crossbeam 22 being connected to the upper edge of the tactile panel 10.

The first, second, third, fourth, fifth and sixth ends 21a, 21b, 22a, 22b, 24a, 25a have terminals 26, adapted to extend and to press the support structure 20 to the building structure. For example, each terminal 26 comprises:
- at least one pad, like a rubber pad, adapted to be in contact with the building structure, and
- a screw adapted to be rotated and to press said pad toward said building structure, so that the support structure 20 is rigidly fixed to said building structure.

In case of a curved building structure, the terminal 26 may comprise two pads distant from each other, so that the terminal is more stable.

Moreover, the lower crossbeam 21 and the upper crossbeam 22 may be telescopic.

The support structure 20 is therefore easily assembled and easily adjusted in position, inclination and orientation to the building structures.

In figure 1, the first and third ends 21a, 22a are connected to a first pillar 52a. The second and fourth ends 21b, 22b are connected to a second pillar 52b. The first and second legs 24, 25 are connected to the floor 51 of the building structure.

Figure 2 and figure 3 are cross sections of the lower crossbeam 21. The tactile panel 10 is connected to the support structure 20 through decoupling connections 30 which are adapted to acoustically decouple said tactile panel 10 from said support structure 20, so that the vibrations propagating in the support structure 20 are not transmitted to the tactile panel 10.

The lower crossbeam 21 comprises a deep longitudinal groove 23, in which is positioned a single or several elastic devices such as elastomer joints or rubber bands or metal wires meshes, forming the decoupling connections 30. The lower edge 13 of the tactile panel 10 is received in said groove 23, and is then supported or suspended by said decoupling connections 30, at decoupling frequencies. The signal provided by the acoustic sensor 15 has a frequency bandwidth between a low and a high frequency. The frequency components in the frequency bandwidth of the signal are useful for the processing unit to determine the touch position P. Advantageously, the decoupling frequencies are bellow said low frequency, and this low frequency is roughly between 100 Hz and 1000 Hz, and for example around 200 Hz.

In figure 2 and 3, the acoustic sensor 15 has a vertical size lower than the deep of the longitudinal groove 23, so that the acoustic sensor 15 can not be seen by the user U. A cable 16 connects said acoustic sensor 15 to said processing unit. The cable 16 advantageously passes through a longitudinal hollow of the crossbeam 21, so that this cable 16 can not be seen by the user U.

Consequently, the tactile device 1 has a pleasant aspect.

In figure 2, the acoustic sensor 15 is directly fixed to the rear face 12 of the tactile panel 10.

In figure 3, the acoustic sensor 15 is pressed on the rear face 12 of the tactile panel 10, by compression means 40. The compression means 40 comprises:
- a casing 41 adapted to be inserted inside the corresponding crossbeam 21, 22,
- a compression spring 42 adapted to press said acoustic sensor 15 on the tactile panel 10 with a compression force and having a length,
- a tuning device 43 in contact with said compression spring 42, movable inside said casing 41 to change said length for adjusting said compression force, and
- a pad 45 interposed between said compression spring 42 and said acoustic sensor 15.

The tuning device 43 may be a screw inside the casing 41, having a face in contact with said compression spring 42.

The casing 41 further includes electrical connecting pins 44. A cable 16 connects said sensor 15 to the electrical connecting pins 44.

The lower crossbeam 21 further includes conductive tracks 27, in contact with said electrical connecting pins 44 of said casing 41, so that the acoustic sensor 15 is connected to the processing unit.

The pad 45 electrically and mechanically decouples the acoustic sensor 15 from the support structure 20, while the compression spring 42 mechanically couples the acoustic sensor 15 to the tactile panel 10 to sense its vibrations and a touch of a user U of the tactile device 1.

Thanks to this casing 41, the acoustic sensor may be longitudinally positioned in the longitudinal groove 23 of the crossbeam, and have an appropriate contact with said tactile device 10. The provided signals are therefore not noisy and adapted to the localisation of the touch. Moreover, the support structure 20 can be easily adapted to various tactile devices 10, for example of various sizes or various materials.

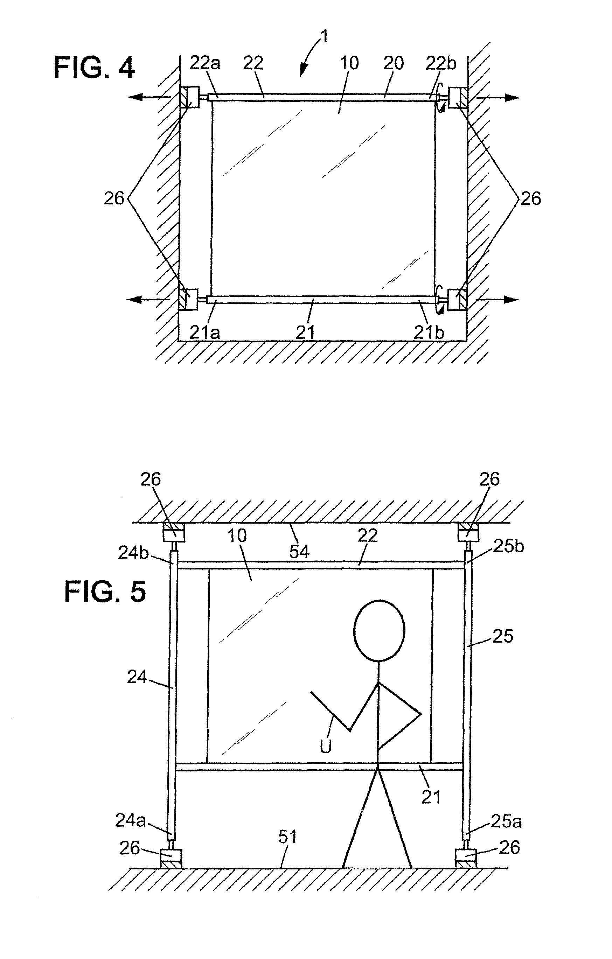

Figure 4 represents a second variant of a use of the first embodiment of the tactile device 1. In this second variant, the building structures are a floor 51 and two wall 53a, 53b. The support structure 20 includes:
- a lower longitudinal crossbeam 21 having a first end 21a and second end 21b, opposite to said first end,
- an upper longitudinal crossbeam 22 having a third end 22a and fourth end 22b, opposite to said third end.

These ends have also terminals 26 adapted to extend and to press the support structure 20 to the building structure. The support structure 20 is therefore rigid.

Figure 5 represents a third variant of a use of the first embodiment of the tactile device 1. In this third variant, the building structures are a floor 51 and a ceiling 54. In this case, the support structure 20 includes:
- a lower longitudinal crossbeam 21,
- an upper longitudinal crossbeam 22,
- a first vertical beam 24 having a lower end 24a and an upper end 24b,
- a second vertical beam 25 having a lower end 25a and an upper end 25b.

These ends have also terminals 26 adapted to extend and to press the support structure 20 to the building structure.

The first and second vertical beams 24, 25 are connected to the lower and upper crossbeams 21, 22, forming a rectangle shape around the tactile panel 10.

These vertical beams 24, 25 may be also telescopic, so that the support structure 20 is easily adjusted to the building structures.

Figures 1, 4, and 5 represent three configurations for using the first embodiment of the invention, in which the tactile device 1 is installed in a room 50 having a plurality of building structures, and the support structure 20 of the tactile device 1 is connected to at least two different building structures of said plurality.

Thanks to these dispositions, the support structure 20 is more rigid and more stable, and the decoupling connections 30 are more efficient.

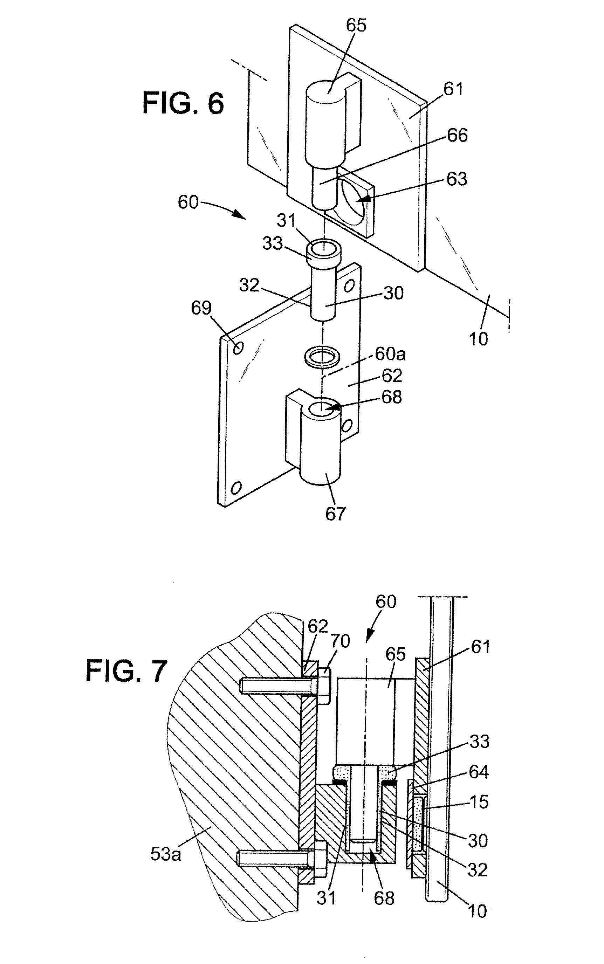

Figures 6 to 12 represent a second embodiment of the invention and configurations for using this second embodiment.

The tactile device 1 of this second embodiment further comprises a hinge 60 having a first element 61 rigidly fixed to said tactile panel 10 and a second element 62 belonging to said support structure 20, wherein:
- said second element 62 is adapted to rotate relative to said first element 61,
- said decoupling connections 30 are interposed between said first and second elements 61, 62.

Thanks to this second embodiment of the invention, the tactile panel 10 may be more easily moved or oriented relative to the building structures.

Figure 6 is an exploded view of this hinge 60 and figure 7 is a cross section thereof. As disclosed later, the tactile device may include a plurality of hinges 60, and advantageously the tactile device 1 includes four hinges sensibly fixed to the four corners of the tactile panel 10.

The first element 61 has a general plate shape and is rigidly fixed to the tactile panel by any known method and preferably by bonding technique. This first element 61 has a hollow 63 adapted to receive the acoustic sensor 15, itself directly bonded on the tactile panel 10 (figure 7), and a cover 64 adapted to close this hollow 63 and protect the sensor 15.

The first element comprises a lateral protrusion 65 and a vertical pin 66 having a cylinder shape.

The second element 62 has also a general plate shape and comprises a similar lateral protrusion 67 with a vertical hollow 68 adapted to receive said pin 66. The pin 66 of the first element 61 may be inserted into the hollow 68 of the second element 62 by action of translation along an axle 60a of the hinge 60 that is a common axle of the pin 66 and hollow 68. The first element 61 may then sensibly rotate relative to said first element 61 around this axel 60a.

This second element 62 may have transversal hollows 69 adapted to receive screws 70 to fix said second element 62 to a building structure, such as a wall 53a.

The hinge 60 further comprises decoupling connections 30 interposed between said first element 61 and said second element 62.

In case of this second embodiment of the invention, the decoupling connections are in the form of a tube made of elastic material, having a cylindrical inner face 31, a cylindrical outer face 32, and an end collar 33.

The inner face 31 is adapted to receive the pin 66 of said first element 61. The outer face 32 is adapted to enter inside the hollow 68 of said second element 62. The end collar 33 is adapted to be interposed in a direction of the axle 60a between the first element 61 and the second element 62.

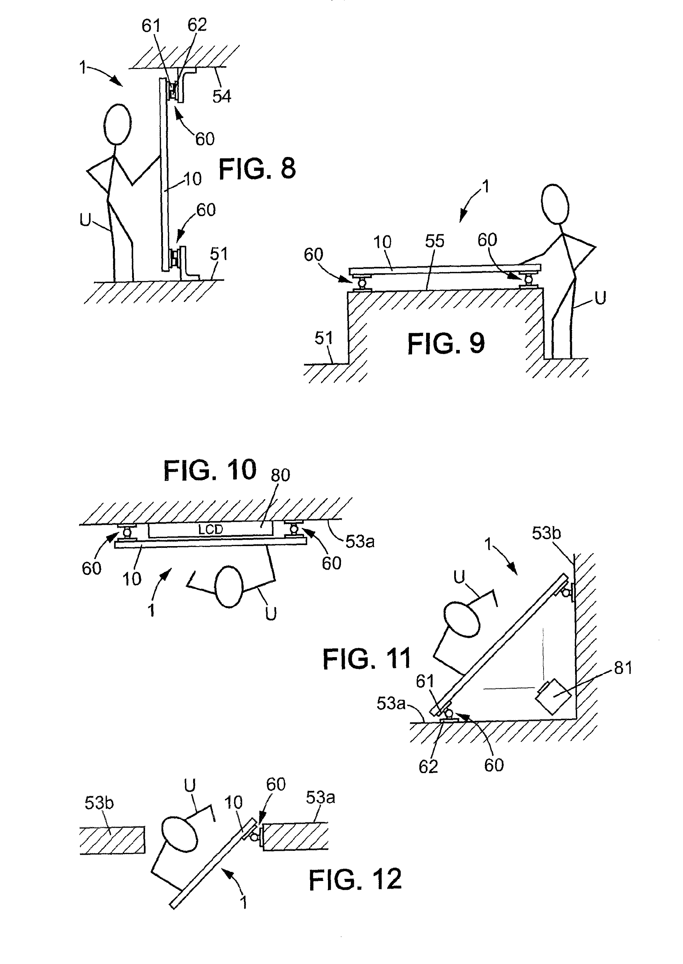

Figures 8 to 12 represent five configurations or variants of use of this second embodiment of the invention.

In the first variant of use of the second embodiment, shown in figure 8, the building structures are a floor 51 and a ceiling 54. Second elements 62 of two hinges 60 are attached to the two different building structures. First elements 61 of the two hinges are attached to the tactile panel 10, which is linked to the building structure between the floor 51 and the ceiling 54.

In the second variant of use of the second embodiment, shown in figure 9, the floor has an elevated portion 55 in a form of a table and hinges 60 connect the tactile panel 10 to this elevated portion 55.

In the third variant of use of the second embodiment, shown in figure 10, the hinges 60 connect the tactile panel to a wall 53a. The tactile panel is transparent. A LCD screen is positioned between the tactile panel 10 and the wall 53a. The tactile panel 10 and the LCD screen behave such as a tactile screen, the processing unit outputting graphical information to the LCD screen corresponding to the touch of the user U on the tactile panel 10 of the tactile device 1.

In the forth variant of use of the second embodiment, shown in figure 11, the hinges 60 connect the tactile panel 10 to two lateral walls 53a, 53b. The tactile panel 10 and the two walls 53a, 53b form a triangle in an upper viewpoint, each hinge having a rotated angle. A projector 81 is positioned in the corner of the two walls 53a, 53b and projects an image on the rear face 12 of the tactile panel 10.

In the fifth variant of use of the second embodiment, shown in figure 12, the hinge 60 connects the tactile panel 10 to a wall 53a. The tactile panel 10 is able to rotate relative to the hinge, operating in the same manner as a door.

In all the variants of the embodiments of the invention, the tactile device 1 includes decoupling connections 30 adapted to acoustically decouple said tactile panel 10 from said support structure 20, avoiding to transmit annoying vibrations from the building to the tactile panel 10.

These decoupling connections 30 may be made of any elastic devices or material, such as elastomer joints or metal wires meshes.

The tactile panel 10 may be opaque or transparent, depending on the use thereof. For example, it will be transparent if there is an LCD monitor or projector facing its rear face. It will be opaque, if the tactile panel 10 presents static signs, such as a keyboard signs or such as switch signs.

## Claims

1. Tactile device comprising at least:
- a tactile panel (10) having at least one acoustic sensor (15) adapted to provide signals to a processing unit such that said processing unit is able to determine a touch position (P) on the tactile panel (10),
- a support structure (20) adapted to support said tactile panel (10),
**wherein** the tactile panel (10) is connected to the support structure (20) through decoupling connections (30) which are adapted to acoustically decouple said tactile panel (10) from said support structure (20).

2. Tactile device according to claim 1, wherein the acoustic sensor (15) has a frequency bandwidth and said decoupling connections (30) are adapted to decouple said tactile panel (10) from said support structure (20) in substantially all of said bandwidth.

3. Tactile device according to claim 1 or claim 2, wherein said at least one acoustic sensor (15) is rigidly fixed on said tactile panel (10).

4. Tactile device according to anyone of the preceding claims, wherein the decoupling connections (30) are elastic devices.

5. Tactile device according to claim 4, wherein the decoupling connections (30) are made of elastomer material.

6. Tactile device according to claim 1, wherein said at least one acoustic sensor (15) is pressed on the tactile panel (10) by compression means (40).

7. Tactile device according to anyone of claims 1 to 6, wherein the tactile panel (10) includes a lower edge (13) and an upper edge (14), and the support structure (20) includes:
- a lower crossbeam (21) which is connected to the lower edge (13) of the tactile panel (10), and
- an upper crossbeam (22) which is connected to the upper edge (14) of the tactile panel (10).

8. Tactile device according to claim 7, wherein the lower crossbeam (21) has a longitudinal groove (23) in which the lower edge (13) of the tactile panel is received and the upper crossbeam (22) has a longitudinal groove (23) in which the upper edge (14) of the tactile panel is received.

9. Tactile device according to the preceding claim, wherein each groove (23) is deeper than a vertical size of said sensor (15).

10. Tactile device according to anyone of claims 7 to 9, in combination with claim 6, wherein the compression means (40) comprise:
- a casing (41) adapted to be inserted inside the corresponding crossbeam (21, 22),
- a compression spring (42) for pressing said sensor (15) on the tactile panel with a compression force and having a length,
- a tuning device (43) in contact with said compression spring (42), movable inside said casing (41) to change said length for adjusting said compression force.

11. Tactile device according to the preceding claim, wherein the tuning device (43) is a screw adapted to push on said compression spring (42) inside said casing (41).

12. Tactile device according to claim 7 or claim 8, wherein at least one of said crossbeams (21, 22) is a hollow profile in which passes at least one cable (16) connecting said at least one acoustic sensor (15) to said processing unit.

13. Tactile device according to claim 7 or claim 8, wherein each crossbeam (21, 22) is telescopic.

14. Tactile device according to anyone of claims 1 to 6, further comprising a hinge (60) having a first element (61) rigidly fixed to said tactile panel (10) and a second element (62) belonging to said support structure (20), wherein:
- said second element (62) is adapted to rotate relative to said first element (61),
- said decoupling connections (30) are interposed between said first and second elements (61, 62).

15. Tactile device according to the preceding claim, wherein the decoupling connections (30) are a tube made of elastic material, having a cylindrical inner face (31) and a cylindrical outer face (32), and wherein:
- the inner face (31) is adapted to receive a pin (66) of the first element (61),
- the outer face (32) is adapted to enter inside a hollow (68) of the second element (62).

16. Tactile device according to claim 14 or claim 15, wherein the acoustic sensor (15) is inside said first element (61).

17. Tactile device according to anyone of the preceding claims, wherein the tactile panel (10) is transparent.

18. Tactile device according to the preceding claim, wherein the tactile panel (10) includes a front face (11) and a rear face (12), said front face (11) is adapted to be touched by a user (U) and to transmit acoustic waves to said acoustic sensor (15), and said rear face (12) is facing an image producing device (80; 81), such as a LCD monitor, a projector or a television set.

19. Use of the tactile device of claim 1, wherein the tactile device (1) is installed in a room (50) having a plurality of building structures (51; 52; 53a; 53b; 54; 55), and the support structure (20) is connected to at least two different building structures (51; 52; 53a; 53b; 54; 55) of said plurality.

20. Use according to claim 19, wherein the plurality of building structures (51; 52; 53a; 53b; 54; 55) includes a floor, a wall, a ceiling, and at least a pillar.
